# EUROPEAN PATENT APPLICATION

(11) **EP 3 354 909 A1**
(43) Date of publication of application: **01.08.2018**
(21) Application number: 17152977.9
(22) Date of filing: 25.01.2017
(51) Int. Cl.: F16B 5/07, F16B 12/00

(54) **MODULAR MULTI-PANEL SYSTEM**

(71) Applicant: ETH Zurich, 8092 Zurich (CH)
(72) Inventor: SENN, Cornelius, 8606 Greifensee (CH)

(57) **Abstract**

A self-centering two-panel assembly comprises a pair of cooperating panels (P1; P2), each having a basic connecting edge (e1; e2) with at least one substantially planar, rigid tongue (t11; t21, t22) protruding therefrom and having an inner tongue face (J11; J21, J22) adjacent to and facing towards an inner panel face (I1; I2) of the respective panel at an inclination angle (α), whereby an inner edge (b1; b2) along the basic connecting edge is defined as intersection of the inner tongue face (J11; J21, J22) with the inner panel face (I1; I2). The basic connecting edge (e1; e2) of each panel comprises recess sections (r11, r12; r21) formed to receive a corresponding tongue (t21, t22; t11) of the other panel. At least one of the basic connecting edges (e2) comprises a recess section (r21) disposed between two tongues (t21, t22), and each recess section (r11, r12; r21) extends from the inner edge (b1; b2) into the respective inner panel face (I1; I2) by a recess distance (dr1, dr2) which is equal to or larger than a minimum recess distance, said minimum recess distance being equal to the local panel thickness (D2; D1) of the other one of said cooperating panels (P2; P1) divided by the sine of the inclination angle (α). A self-supporting three-panel assembly comprises a two-panel assembly as disclosed above and a supplementary panel cooperating therewith.

## Description

### Field of the Invention

The present invention generally relates to a modular multi-panel system. In particular, it relates to a self-centering two-panel system and to a self-supporting three-panel comprising such a two-panel system.

### Background of the Invention

There are virtually countless applications which rely in some manner on a modular system of panels. To quote just a few examples, modular panel systems are implemented as bookshelves, repository system shelves, cardboard boxing systems, metal cabinets and many others. Most if not all of these systems comprise some fastening means which allow forming a safe, mechanically stable but nonetheless releasable connection between panels. In some instances it is appropriate to use some kind of threaded connection, which indeed can provide a very reliable, releasable connection between panels and/or with any supplementary components of an assembly system, such as e.g. a frame element. However, threaded connections invariably require separate parts such as nuts and/or bolts which may easily be misplaced or lost before assembly of a system and which, furthermore, may be difficult to put in place under adverse conditions or in extreme environments. Accordingly, various other connecting principles have been proposed and implemented.

One example of a modular self-locking panel connectable in a closed polygon is disclosed in US 5,360,263 A. Further similar panel assemblies are described in EP 0886072 B1, FR 2258589 A1 and US 2012/270463 A1.

In spite of the above described situation, there is still a need for any novel modular multi-panel systems that may stand out for simplicity, reliability and/or adaptability.

### Summary of the Invention

The above and other objects are solved by the present invention.

According to one aspect of the invention (claim 1), there is provided a self-centering two-panel assembly comprising:
- a pair of cooperating panels comprising a first panel and a second panel, each panel having an inner face, an outer face and a basic connecting edge, each panel being substantially rigid at least in a neighborhood of the connecting edge;
- the basic connecting edge of each cooperating panel having at least one substantially planar, rigid tongue protruding therefrom, each tongue having an inner tongue face adjacent to and facing towards an inner panel face of the respective panel at an inclination angle, whereby an inner edge along the basic connecting edge is defined as intersection of the inner tongue face with the inner panel face;
- the basic connecting edge of each cooperating panel further comprising recess sections, each recess section being formed to receive a corresponding tongue of the other one of said cooperating panels;
- each panel having, for each recess section thereof, an effective zone adjacent to said recess section, each effective zone having an in-plane size corresponding to that of the cooperating tongue of the other one of said cooperating panels, each effective zone defining a local panel thickness;
- wherein at least one of the basic connecting edges comprises a recess section disposed between two tongues, and
- wherein each recess section extends from the inner edge into the respective inner panel face by a recess distance which is equal to or larger than a minimum recess distance, said minimum recess distance being equal to the local panel thickness of the other one of said cooperating panels divided by the sine of the inclination angle.

The inventors have surprisingly found a two-panel assembly which stands out for its simplicity in combination with reliability, ease of use and adaptability. As will be shown in more detail further below, the assembly relies on having tongues formed at the edge of a given panel to engage in corresponding recess sections formed at the edge of an adjacent panel. This provides a limitation or final stop of the intersection angle between the planes of the two panels. In other words, the intersection angle can be opened up until an abutment is reached between the tongues of each panel with corresponding faces of the adjacent panel. In this manner it is possible to quickly set up two panels at a predefined intersection angle, for example at right angle.

As will be explained in more detail further below, the term "self-centering" shall be understood in respect of two cooperating panels being brought together by engaging protruding panel tongues into corresponding panel recess sections. When subsequently the panel pair is swung open to reach abutment, one and the same final configuration is reached independently of a possible initial displacement between a tongue and the corresponding recess section in a direction substantially perpendicular to the basic connecting edge.

The panel region adjacent to each recess section is particularly important for the purpose of the present invention. More precisely, an effective zone adjacent to each recess section and having an in-plane size corresponding to that of the cooperating tongue of the other cooperating panel defines the local panel thickness which in turn defines the minimum recess distance that needs to be fulfilled by each recess section of the cooperating panels. In the simplest case, which will be found in many embodiments, each effective zone is substantially planar. Moreover, in many embodiments all of the effective zones of a given panel are parallel to each other.

As will also be discussed further below, division by the sine of the inclination angle takes into account that the size of the recesses needed to accommodate the cooperating panel not only depends on the cooperating panel's local thickness, but also on its inclination.

With simple additional means, which notably can be by attaching a third panel, or even further panels, in a similar manner, one can form a self-supporting multi-panel structure.

It should be emphasized that any geometric properties that will be mentioned in relation to the present invention shall not be understood in the strict mathematical sense. Rather than that, such properties shall be understood with a degree of accuracy or tolerance that corresponds to the type of structure, material and purpose of the involved parts. For example, the accuracy of describing a plane formed by the surface of a substantially planar panel will depend on the roughness and stiffness of the surface, but in spite of this inherent arbitrariness, the technical significance of such a plane in the context of the present invention will be evident for the skilled person.

As will also be described in more detail, the "edge" of a panel shall be understood as the effective peripheral limit of the panel and shall not be misunderstood as being a straight line. Indeed, according to the invention, the so-called "connecting edge" of a panel comprises a non-straight edge structure which is generally formed to match a corresponding edge structure of a cooperating panel.

In contrast to the panel edge, the term "inner edge" will be used to denote a purely geometric, strictly straight line which is defined as the intersection of an inner tongue face and a panel face.

For many applications the panels will be rigid and substantially planar. However, this is not mandatory. Rather than that, each panel shall be rigid at least in a neighborhood of the connecting edge. The term "neighborhood" shall refer to a panel region sufficiently large as to enable the principle of the invention, i.e. the interaction between various elements of two cooperating panels to function in the sense of the invention. Accordingly, a panel according to the present invention may actually be flexible or non-flat and bulky in the region sufficiently displaced from any cooperating panel edge. It will also be understood that "rigidity" is a relative term which depends on the intended application, which in turn determines size, material and load to the various components of the assembly.

The panels used for the assemblies of the present invention can be formed of any materials that are suitable for a specific purpose. In particular, but without limitation, the panels can be formed of a metal, plastic, wood or cardboard by any known forming or shaping techniques. It will also be understood that the dimensions of such panels, notably including their thickness and the size of tongues and recess sections shall be selected in accordance with the material's properties, notably including stiffness and mechanical stability.

Advantageous embodiments are defined in the dependent claims and described further below.

According to one embodiment (claim 2), the two cooperating panels are identical. This may be a significant simplification in terms of production cost and logistics.

In principle, the tongues of each panel could be produced as separate elements and attached to the panel before use. Advantageously, however, the tongues of each panel are integrally formed therewith (claim 3). Depending on material and other factors, such integrally formed tongues can be produced e.g. by bending, milling or casting or by 3D printing.

According to an advantageous embodiment (claim 4), each panel has a uniform panel thickness. As will be understood this thickness uniformity implies that the local panel thickness of a given panel is equal to its panel thickness.

According to another advantageous embodiment (claim 5), each tongue has a tongue thickness which is substantially identical to the respective uniform panel thickness. This allows, in particular, to form the required tongues by bending out of a sheet material which is also used to form the panel.

According to a further embodiment, the tongues have the shape of a rectangular prism. This is a tongue shape which allows simple forming, and it also provides good surface overlap with a counter-face. It should be emphasized that "substantially rectangular" shall include any rounding of corners and/or edges that is helpful to reduce mechanical friction and/or jamming and for reducing the risk of injury.

In principle, the inclination angle can be selected in a rather broad range. However, for very small angles it becomes difficult to assemble the cooperating panels whereas for comparatively large angles close to 180º the resulting two-panel assembly is prone to overturning in cases where the assembly is placed with one panel lying flatly on the ground and easily disassembles upon a small reduction of the angle between the two panels. Advantageously (claim 6), the inclination angle is selected in the range of 30º to 150º, preferably 75º to 120º, particularly about 90º. The latter selection is particularly useful for forming any assemblies of the rectangular box type. As will be understood, the angular correction factor for the recess distance becomes 1 at an inclination angle of 90º.

Further embodiments (claims 7 to 9) are adapted for the formation of assemblies with more than two panels.

According to one such embodiment (claim 7):
- the first panel further comprises a first complementary connecting edge intersecting the basic connecting edge of the first panel at a first vertex angle and wherein the second panel further comprises a second complementary connecting edge intersecting the basic connecting edge of the second panel at a second vertex angle and also intersecting the first complementary connecting edge when the first panel and the second panel are connected to each other;
- the first complementary connecting edge having at least one substantially planar, rigid complementary tongue protruding therefrom,
- each complementary tongue having an inner complementary tongue face adjacent to and facing towards the inner panel face of the first panel at a complementary inclination angle, whereby a complementary inner edge along the complementary connecting edge is defined as intersection of the inner complementary tongue face with the inner panel face of the first panel;
- the first complementary connecting edge further comprising first complementary recess sections, each complementary recess section being formed to receive a correspondingly formed supplementary tongue of a supplementary panel to be connected to the two-panel assembly; and
- the second complementary connecting edge being provided with stopper faces for the supplementary panel.

Advantageously (claim 8), the vertex angle of each panel is independently selected in the range of 60º to 150º, preferably 75º to 120º, particularly about 90º. According to a further embodiment (claim 9), the vertex angle of each panel and the inclination angle are all substantially 90º.

According to another aspect of the invention (claim 10), there is provided a self-supporting three-panel assembly, comprising a two-panel assembly according to one embodiment as defined above and further comprising a supplementary panel cooperating therewith, with the following features:
- the supplementary panel has an inner face, an outer face and first and second supplementary connecting edges intersecting each other at a supplementary vertex angle,
- the supplementary panel is substantially rigid at least in a neighborhood of the supplementary connecting edges;
- the first supplementary connecting edge has at least one substantially planar, rigid supplementary tongue protruding therefrom;
- each supplementary tongue has an inner supplementary tongue face adjacent to and facing towards the inner panel face of the supplementary panel at said complementary inclination angle, whereby a supplementary inner edge along the supplementary connecting edge is defined as intersection of the inner supplementary tongue face with the inner panel face of the supplementary panel;
- the first supplementary connecting edge further comprises first supplementary recess sections, each supplementary recess section being formed to receive a corresponding tongue of the first complementary connecting edge of the first panel;
- the first panel having, for each first complementary recess section thereof, an effective zone adjacent to said recess section, each effective zone having an in-plane size corresponding to that of the corresponding tongue of the supplementary panel, each effective zone defining a local complementary panel thickness;
- the supplementary panel having, for each first supplementary recess section thereof, an effective zone adjacent to said recess section, each effective zone having an in-plane size corresponding to that of the corresponding tongue of the first panel, each effective zone defining a local supplementary panel thickness;
- wherein at least one of the first complementary connecting edge and the first supplementary connecting edge comprises a recess section disposed between two tongues;
- wherein each one of said complementary recess sections and supplementary recess sections extends from the respective inner edge into the respective inner panel face by a recess distance which is equal to or larger than a minimum recess distance, said minimum recess distance being equal to the local supplementary or complementary panel thickness of the other one of said first panel and supplementary panel divided by the sine of the complementary inclination angle; and
- wherein the second supplementary connecting edge of the supplementary panel is substantially collinear with the second complementary connecting edge of the second panel and abuts against the stopper faces thereof.

It should be noted that the angle by which each supplementary tongue is inclined towards the inner panel face of the supplementary panel is the same angle, i.e. the complementary inclination angle, formed between the complementary tongues and the inner panel face of the complementary panel.

According to an advantageous embodiment (claim 10), the first vertex angle, the second vertex angle, the supplementary vertex angle, the inclination angle and the complementary inclination angle are all substantially 90º.

According to another embodiment (claim 12), the three-panel assembly further comprises means for mutually locking the second supplementary connecting edge and the second complementary connecting edge.

As already mentioned, the panels forming a two- or three-panel assembly can have a large variety of shapes. According to an advantageous embodiment (claim 13) of the three-panel assembly, each panel has a shape selected from quadratic, cropped quadratic and triangular.

As also mentioned above, the two- and three-panel assemblies of the present invention may be used to build up a multi-panel assembly up to a fully closed polyhedron. Therefore, according to one embodiment (claim 14), a three-panel assembly further comprises at least one additional panel connected thereto along at least two edges

The two- and three-panel assemblies of the present invention have a very broad field of use which basically includes any applications that may benefit from an easy-to-assemble, reliable and convenient multi-panel structure.

One such application is the use as microwave reflector, particularly for remote sensing or as a radar reference point. Therefore, according to a further aspect of the invention (claim 15), there is provided a microwave reflector comprising a three-panel assembly as defined above, wherein at least the inner faces of the panels are covered by a microwave reflecting material.

### Brief description of the drawings

The above mentioned and other features and objects of this invention and the manner of achieving them will become more apparent and the invention itself will be better understood by reference to the following description of embodiments of this invention taken in conjunction with the accompanying drawings, wherein are shown:
- Fig. 1: a pair of panels, in a disassembled state, in a schematic perspective view;
- Fig. 2: the panel pair of Fig. 1, in an assembled state, in a schematic perspective view;
- Fig. 3: a pair of panels, in a front elevational view:
a) in a separated pre-aligned state;
b) in a contacted state;
c) in a partially unfolded state; and
d) in a fully unfolded state:
- Fig. 4: the pair of panels of Fig. 3, in a sectional view:
a) in one possible separated pre-aligned state;
b) in one possible contacted state;
c) in another possible separated pre-aligned state;
d) in another possible contacted state;
e) in the partially unfolded state; and
f) in the self-centered fully unfolded state;
- Fig. 5: another pair of panels, in a schematic side elevational view
a) in a separated pre-aligned state;
b) in an initial contacted state; and
c) in the self-centered fully unfolded state;
- Fig. 6: a further two-panel assembly, in a sectional view;
- Fig. 7: another two-panel assembly, in a schematic perspective view, in the self-centered fully unfolded state;
- Fig. 8: a further two-panel assembly, in a schematic perspective view
a) in a partially unfolded state; and
b) in the self-centered fully unfolded state;
- Fig. 9: another two-panel assembly, in a schematic perspective view
a) in a partially unfolded state; and
b) in the self-centered fully unfolded state;
- Fig. 10: a schematic representation of geometric relations in a three-panel assembly;
- Fig. 11: a three-panel assembly, in a disassembled state, in a top view;
- Fig. 12: a three-panel assembly, in a fully unfolded state, in a perspective view from outside; and
- Fig. 13: the three-panel assembly of Fig. 12, in an initial contacted state (a), in a first partially unfolded state (b), and in a second partially unfolded state (c), in a perspective view from inside.

### Detailed description of the invention

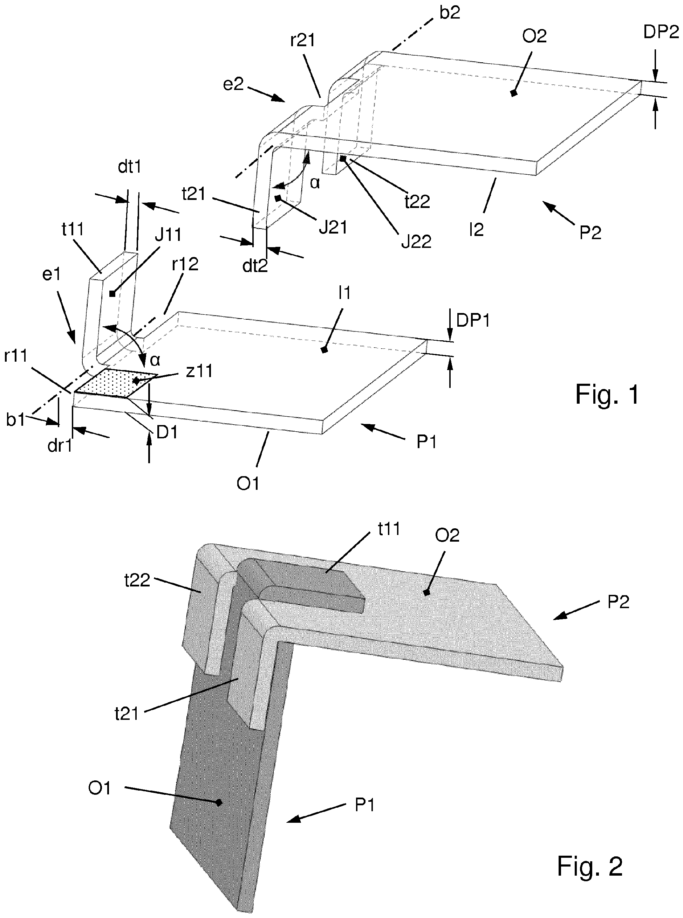

An exemplary embodiment of a two-panel assembly is explained in Figs. 1 and 2. The assembly comprises a first panel P1 and a second panel P2, each panel having an inner face I1 or I2 and an outer face O1 or O2. In the example shown, the two panels have a uniform panel thickness DP1 or DP2, respectively. The panels are made of a formable, rigid material such as sheet metal. Each panel comprises a basic connecting edge e1 or e2 generally indicated by arrows. In the example shown, the basic connecting edge e1 of the first panel comprises a planar, rigid tongue t11 with a thickness dt1 protruding therefrom and having an inner tongue face J11 adjacent to and facing towards the inner panel face I1 at an inclination angle α. Similarly, the basic connecting edge e2 of the second panel comprises two protruding planar, rigid tongues t21 and t22 with a thickness dt2 having inner tongue faces J21 and J22 adjacent to and facing towards the inner panel face I2 at an inclination angle α.

As indicated in Fig. 1, inner edges b1 and b2 along the basic connecting edges e1 and e2 are defined, respectively, as intersection of the inner tongue face J11 with the inner panel face I1, and as intersection of the inner tongue faces J21 and J22 with the inner face I2 of the second panel P2.

The basic connecting edge e1 of the first panel P1 further comprises recess sections r11 and r12 which are formed to receive a corresponding tongue t21, t22 of the second panel P2. Analogously, the basic connecting edge e2 of the second panel P2 further comprises a recess section r21 which is formed to receive the tongue t11 of the first panel P1.

Each panel has, for each recess section r11, r12 or r21 thereof, an effective zone z11, z12 or z21 adjacent to said recess section. For better clarity only, Fig. 1 merely shows the effective zone z11 associated with recess section r11. Each effective zone has an in-plane size corresponding to that of the cooperating tongue of the other one of said cooperating panels. Each effective zone defines a local panel thickness D1 or D2. In the simple embodiment with uniform thickness panels shown in Figs. 1 and 2, the local panel thickness D1 is equal to the uniform panel thickness DP1.

Importantly, at least one of the basic connecting edges comprises a recess section disposed between two tongues. In the example shown, this is the case for the basic connecting edge e2 of the second panel P2, which is seen to have a single recess section r21 disposed between the two tongues t21 and t22. In this manner, when the two panels are in mutual engagement, a relative displacement of the two panels by sliding along the basic connecting edges is limited because the tongue t11 of the first panel P1 abuts against either one of the tongues t21 and t22 of the second panel P2.

In the example shown, each tongue is formed integrally with the respective panel by bending, and accordingly the tongues have a small rounded section in the neighborhood of the edge.

It is essential that each of the recess sections r11, r12 and r21 extends from the inner edge b1 or b2 into the respective inner panel face I1 or I2 by a recess distance dr1 or dr2, respectively, which is equal to or larger than a minimum recess distance. The minimum recess distance is equal to the local panel thickness D2 or D1 of the other one of said cooperating panels P2 or P1 divided by the sine of the inclination angle α. In the example of Figs. 1 and 2 the inclination angle α is substantially a right angle, meaning that the denominator sin α = 1.

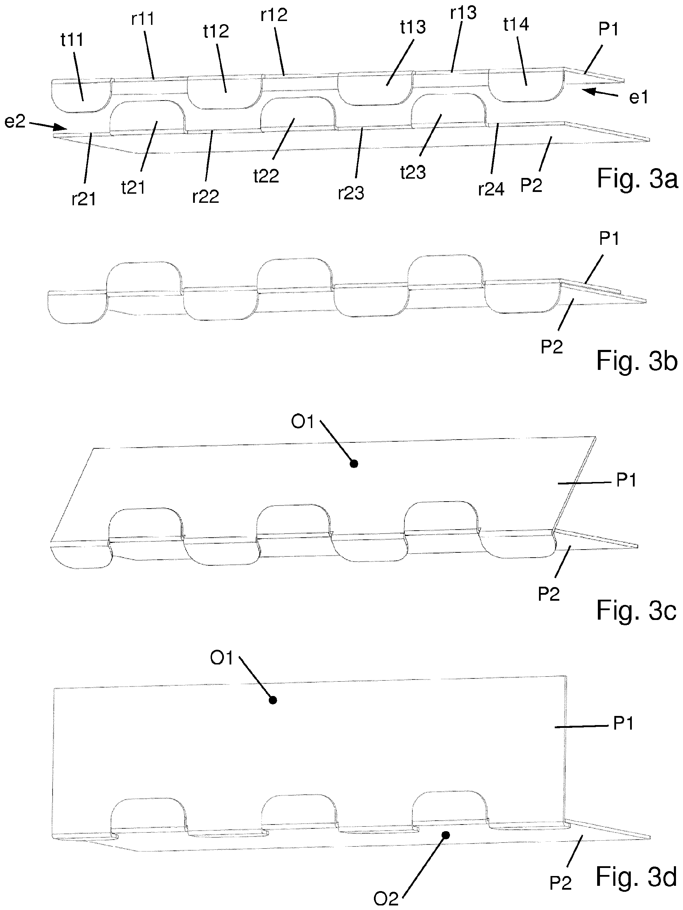

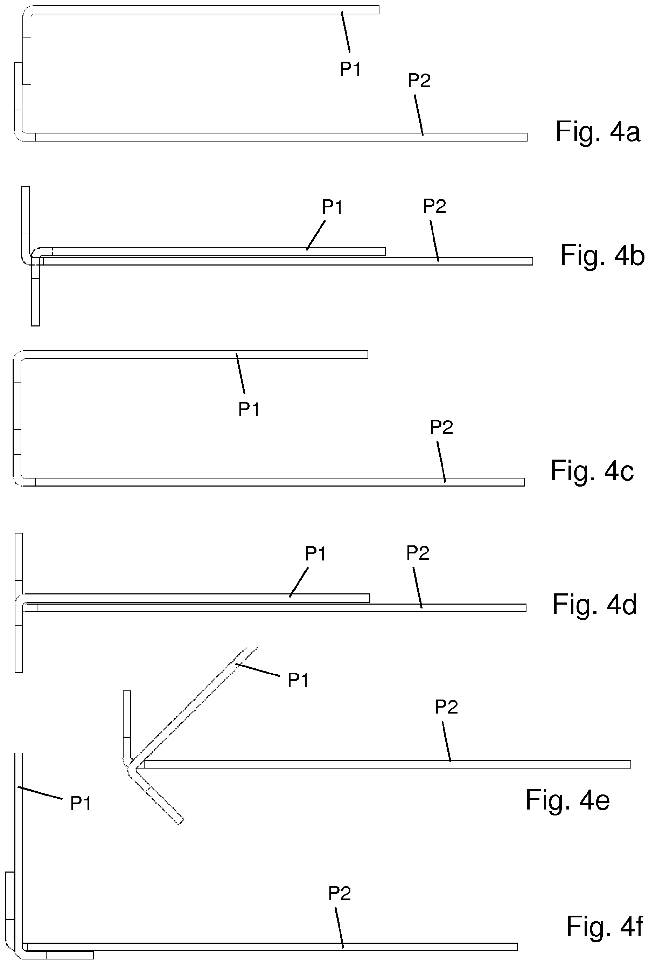

The principle of cooperating and self-centering panels is further illustrated in Figs. 3 and 4. In this embodiment each panel has a plurality of tongues t11, t12, t13, t14 or t21, t22, t23 and of corresponding recesses r11, r12, r13 or r21, r22, r23, r24. Various steps in assembling the two panels are explained now.

It is advantageous to start with the two panels in a separated but pre-aligned state as shown in Fig. 3a, where the two panels P1 and P2 are substantially parallel to each other with the basic connecting edges e1 and e2 oriented parallel and adjacent to each other and with the tongues of each panel pointing towards the basic connecting edge of the other panel. Subsequently, the two panels are brought together until they are stacked against each other with the respective inner planes I1 and I2 in mutual contact while the tongues of each panel are inserted in corresponding recesses of the other panel. This leads to a contacted state as depicted in Fig. 3b. Subsequently the two panels are swiveled apart by opening the angle between the two panel planes as shown (see Fig. 3c) until the outer plane of each panel abuts against the inner tongue faces of the cooperating panel (see Fig. 3d).

As will be seen particularly from Fig. 4, more than one pre-aligned state and also more than one contacted state of the two panels can be chosen. Two cases are shown in Figs. 4a to 4d. In a first pre-aligned state according to Fig. 4a, the two panels are slightly displaced in a direction perpendicular to the tongue planes, i.e. in Fig. 4a the upper panel P1 is slightly shifted to the right hand side with respect to the lower panel P2 (henceforth called "lateral displacement"). This displacement is maintained when the two panels are brought together to reach a first contacted state as shown in Fig. 4b. Alternatively, one could start from a second pre-aligned state as shown in Fig. 4c, in which the two panels are not mutually displaced. This leads to a second contacted state as shown in Fig. 4d. Further pre-aligned and contacted states with other amounts of lateral displacement are possible. It will be understood that the lateral displacement of the contacted state can be changed independently of the initial pre-aligned state simply by sliding the panels in appropriate manner.

Importantly, however, when the two panels are swiveled apart by opening the angle between the two panel planes as shown in Figs. 4e, the same fully unfolded state shown in Fig. 4f is reached independently of the initial pre-aligned state and of the contacted state. This property of the two-panel system is called here "self-centering".

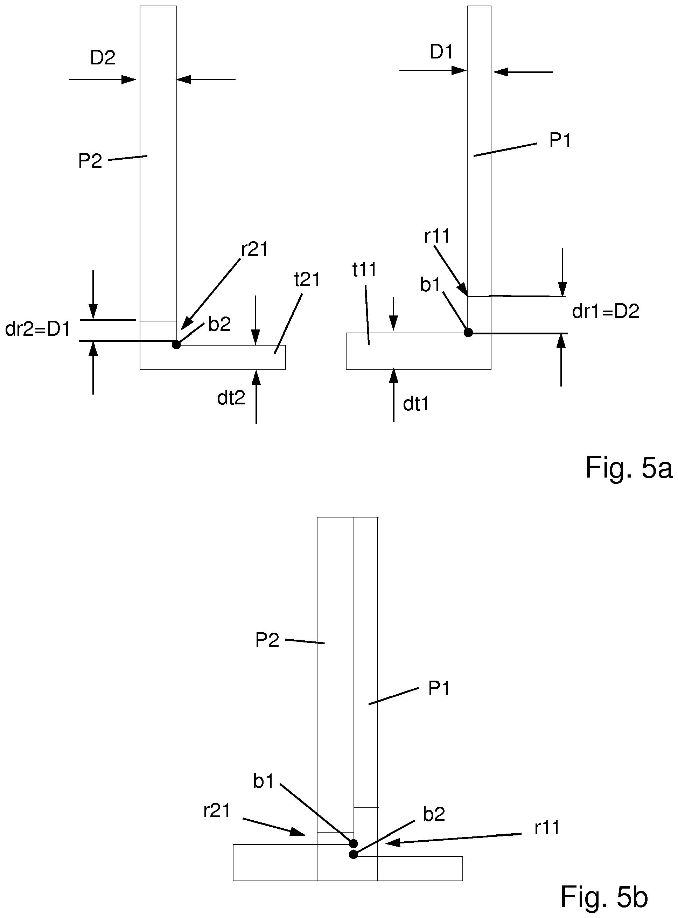

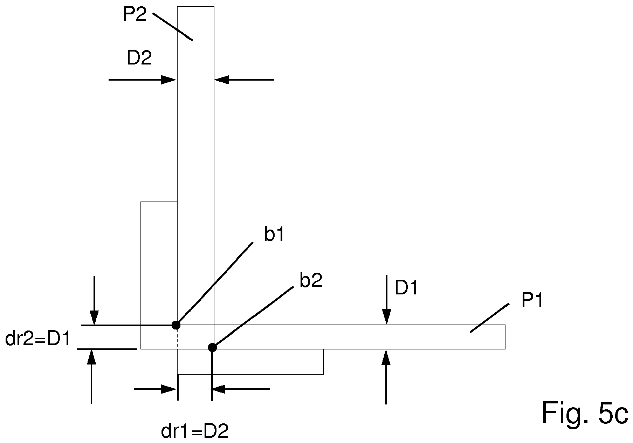

In a further embodiment of a two-panel assembly as shown in Fig. 5a to 5c, the first panel P1 has a thickness D1 which is substantially smaller than the thickness D2 of the second panel. For this case with an inclination angle α = 90º the recess distance of each panel shall be at least equal to the thickness of the other panel, i.e. dr1=D2 and dr2=D1, which in this example implies substantially larger recesses in the first panel P1 than in the second panel P2. Also shown in Figs. 5a to 5c are the two inner edges b1 and b2.

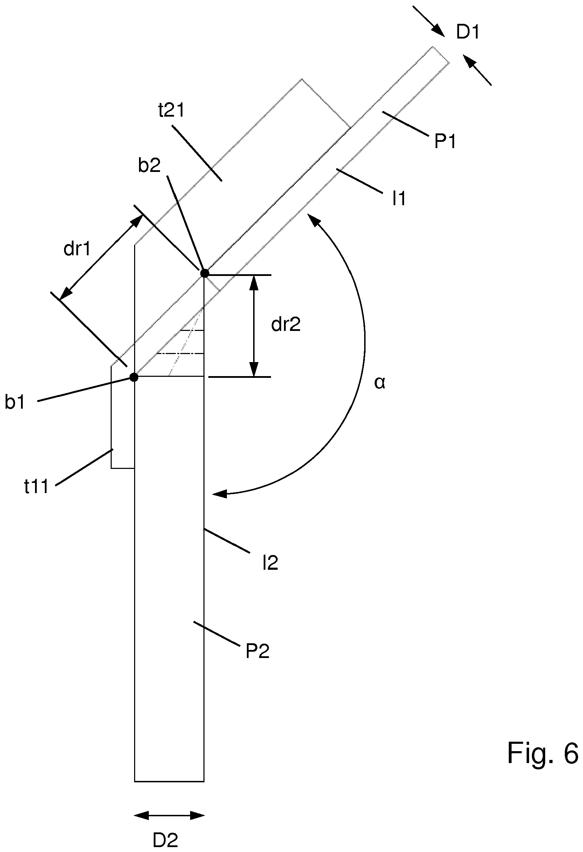

A further embodiment of a two-panel assembly is shown in Fig. 6. In this non-orthogonal case the inclination angle α = 135º and, moreover, the second panel P2 has a thickness D2 which is about three times larger than the thickness D1 of the first panel P1. In the case shown here, the angular correction requiring a division by sin 135º implies that the minimum recess distance shall be enlarged by a factor √2, i.e. about 1.414 in comparison with the orthogonal case. In other words, dr1 ≥ √2 D2 and dr2 ≥ √2 D1.

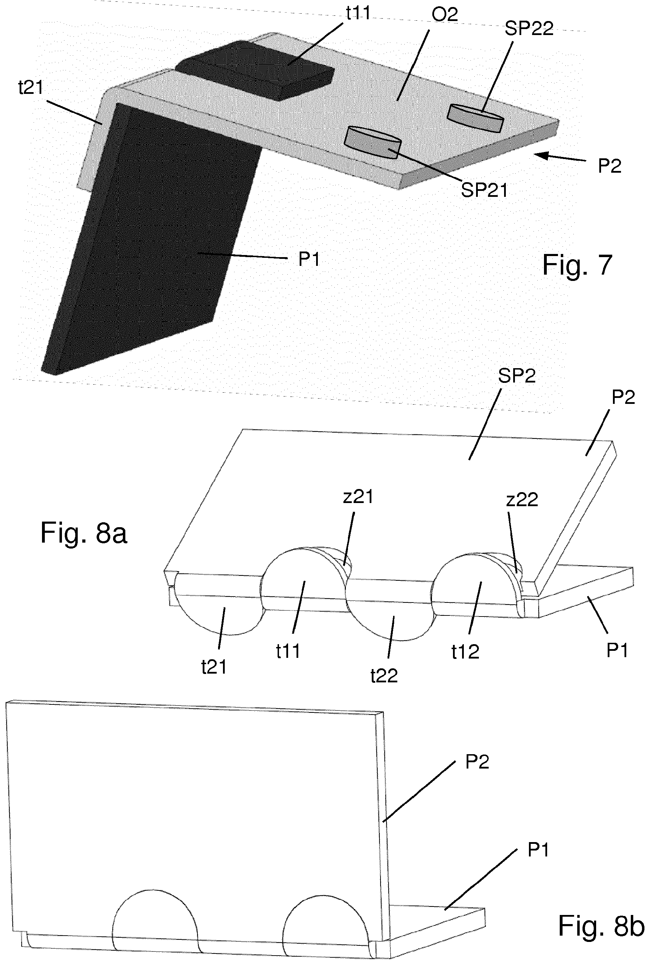

Incidentally, Fig. 6 illustrates that the thickness of the tongues does not influence the required recess distances because the tongue thickness actually contributes to the extent in a direction away from the contact region between inner tongue face and outer face of the cooperating panel. As seen from the further example of Fig. 7, tongue thickness becomes relevant if one wishes to have a planar structure at the outer face of a panel. For this purpose, it is shown in Fig. 7 how two spacer elements SP21 and SP22 may be attached on the outer face 02 of panel P2 to match the thickness of the tongue t11 of the cooperating panel P1. Such an embodiment would allow having the two-panel assembly resting on the outer face 02 in a stable manner.

As shown in Figs. 8a and 8b, the function of the spacer elements SP21 and SP22 according to Fig. 7 can be realized by extending the spacer size so as to encompass the entire outer face of a panel except for the effective zones z21 and z22 having a size corresponding to that of the cooperating tongue t11 or t12 of the other panel.

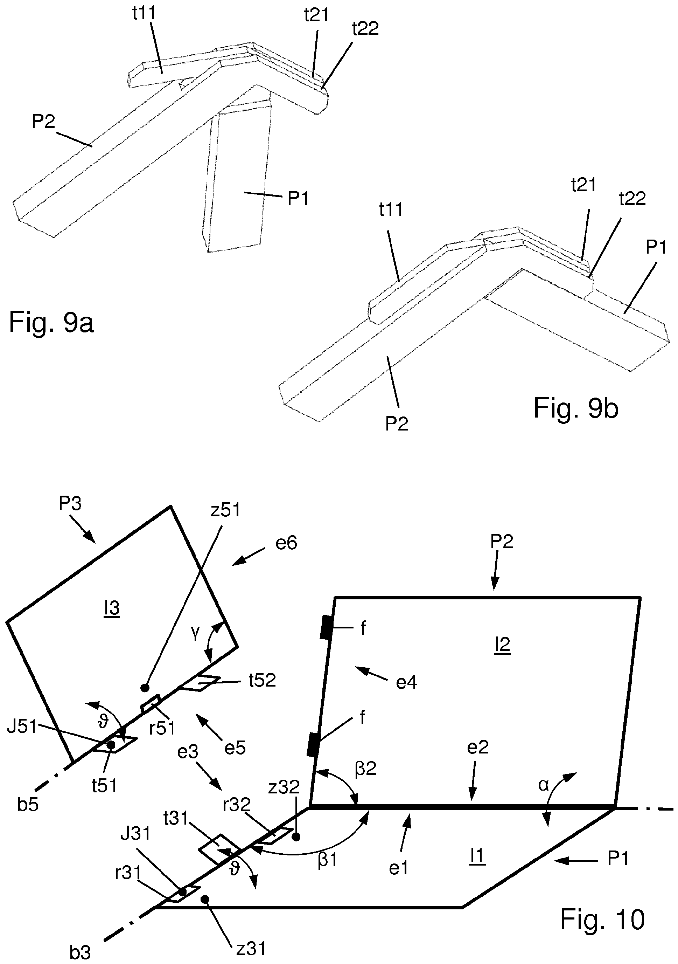

The term "panel" in the sense of the present invention should not be understood as a limitation in terms of the relative shape of various components. As shown in Figs. 9a and 9b, certain embodiments may have a lamellar type structure in which the thickness of a panel is larger than its width along the connecting edge.

A schematic representation of geometric relations in a three-panel assembly is given in Fig. 10, which consists of a two-panel assembly comprising a first panel P1 and a second panel P2 and of a third, or supplementary, panel P3 shown ready for connection to the two-panel assembly. For ease of reading it will be mentioned that several features of the first and second panels that are intended to cooperate with the third panel will be termed "complementary", whereas features of the third panel will be termed "supplementary".

The first panel P1 comprises a first complementary connecting edge e3 intersecting its basic connecting edge e1 of the first panel at a first vertex angle β1 whereas the second panel P2 comprises a second complementary connecting edge e4 intersecting its basic connecting edge e2 at a second vertex angle β2. The second complementary connecting edge e4 furthermore intersects the first complementary connecting edge e3 when the first panel P1 and the second panel P2 are connected to each other.

The first complementary connecting edge e3 of the first panel P1 has a substantially planar, rigid complementary tongue t31 protruding therefrom and having an inner complementary tongue face J31 adjacent to and facing towards the inner panel face I1 at a complementary inclination angle ϑ. In this manner, a complementary inner edge b3 along the complementary connecting edge e3 is defined as intersection of the inner complementary tongue face J31 with the inner panel face I1. Moreover, the first complementary connecting edge e3 further comprises first complementary recess sections r31 and r32 formed to receive correspondingly formed supplementary tongues t51 and t52 of the supplementary panel P3.

In contrast, the second complementary connecting edge e4 of the second panel P2 is provided with stopper faces f for the supplementary panel.

The supplementary panel P3 has an inner face I3, an outer face 03, a supplementary panel thickness D3 and first and second supplementary connecting edges e5 and e6 intersecting each other at a supplementary vertex angle γ.

Like the first and second panel, the supplementary panel is substantially rigid at least in a neighborhood of its supplementary connecting edges. Moreover, the first supplementary connecting edge e5 has two substantially planar, rigid supplementary tongues t51 and t52 protruding therefrom, each supplementary tongue having an inner supplementary tongue face J51 or J52 adjacent to and facing towards the inner panel face I3 of the supplementary panel P3 at an angle which is identical to the complementary inclination angle ϑ of mentioned above. A supplementary inner edge b5 along the supplementary connecting edge e5 of the third panel is defined-as intersection of the inner supplementary tongue face J51 with the inner panel face I3. The first supplementary connecting edge e5 further comprises first supplementary recess sections r5 formed to receive each tongue t31 of the first complementary connecting edge e3 of the first panel P1.

The first panel P1 has, for each of its first complementary recess sections r31 and r32, an effective zone z31 or z32 adjacent to said recess section. Each effective zone has an in-plane size corresponding to that of the corresponding tongue t51 or t52 of the supplementary panel P3, with each effective zone defining a local complementary panel thickness DC. Moreover, the supplementary panel P3 has for each of its first supplementary recess sections r51 an effective zone z51 adjacent to said recess section. Each effective zone has an in-plane size corresponding to that of the corresponding tongue t31 of the first panel P1, with each effective zone defining a local supplementary panel thickness DS.

In the example shown here, the first supplementary connecting edge e5 of the third panel P3 comprises a recess section r51 disposed between two tongues t51, t52.

Importantly, each one of the complementary recess sections r31 and r32 and also the supplementary recess section r51 extend from the respective inner edge b3 or b5 into the respective inner panel face I3 or I5 by a recess distance dr3 or dr5 which is equal to or larger than a minimum recess distance which is equal to the local supplementary or complementary panel thickness DS or DC of the other one of said first panel P1 and supplementary panel P3 divided by the sine of the complementary inclination angle ϑ.

Once the three panels have been joined to form a three-panel assembly, the second supplementary connecting edge e6 of the supplementary panel P3 is substantially collinear with the second complementary connecting edge e4 of the second panel P2 and abuts against the stopper faces f thereof, as will also be shown in the following example.

It should be pointed out that in the general, non-orthogonal case there are geometric relations holding between the various angles α, β1, β2, γ and ϑ. If necessary, the angles required to form a three-panel assembly of a desired shape can be calculated numerically.

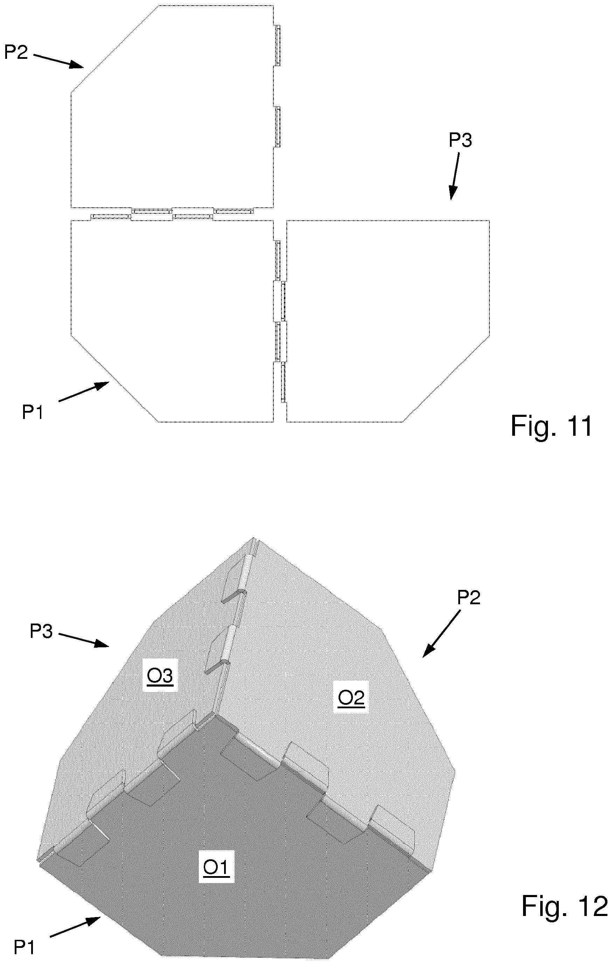

An embodiment of an orthogonal self-supporting three-panel system with cropped quadratic faces is shown in Figs. 11 to 13. Such an arrangement is useful, e.g. as a microwave reflector, particularly for remote sensing or as a radar reference point. For such applications the inner faces I1, I2 and I3 of the three panels P1, P2 and P3 are covered by a microwave reflecting material.

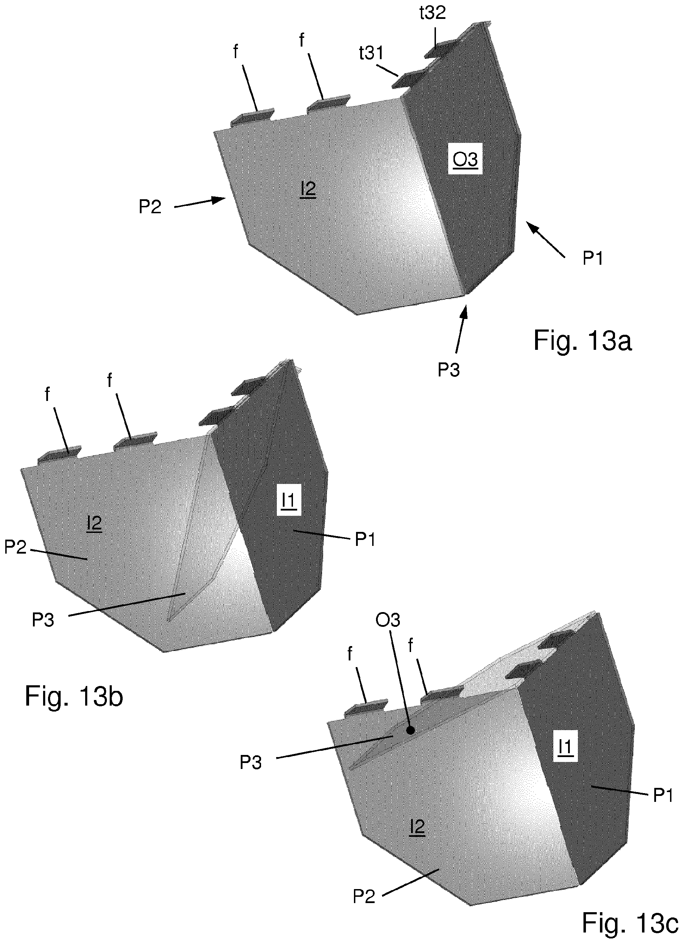

A top view of the three panels in a disassembled state is shown in Fig. 11, whereas Fig. 12 shows the fully assembled arrangement seen from outside. The step of assembly the three-panel arrangement is further illustrated in Fig. 13, which shows the system from the inner side. In Fig. 13a, panels P1 and P2 are already assembled whereas the third (or supplementary) panel P3 is engaged with panel P1 with the respective inner faces I1 and I3 (not visible) in mutual contact. The third panel is then gradually swiveled upwards reaching a first partially unfolded state as shown in Fig. 13b, followed by a second partially unfolded state as shown in Fig. 13c. Finally, a completely unfolded state not shown here is reached when the outer face 03 of the third panel P3 abuts against the stopper faces f of the second panel P2.

While such a three-panel assembly is self-supporting, i.e. can be left standing on the ground without collapsing, it is nonetheless advantageous to provide some means for mutually locking the second supplementary connecting edge e6 of the third panel and the second complementary connecting edge e4 of the second panel so as to keep the third panel P3 in abutment against the stopper faces f.

## Claims

1. A self-centering two-panel assembly comprising:
- a pair of cooperating panels comprising a first panel (P1) and a second panel (P2), each panel having an inner face (I1; I2), an outer face (O1; 02), and a basic connecting edge (e1; e2), each panel being substantially rigid at least in a neighborhood of the connecting edge;
- the basic connecting edge of each cooperating panel having at least one substantially planar, rigid tongue (t11; t21, t22) protruding therefrom, each tongue having an inner tongue face (J11; J21, J22) adjacent to and facing towards an inner panel face (I1; I2) of the respective panel at an inclination angle (α), whereby an inner edge (b1; b2) along the basic connecting edge is defined as intersection of the inner tongue face (J11; J21, J22) with the inner panel face (I1; I2);
- the basic connecting edge (e1; e2) of each cooperating panel further comprising recess sections (r11, r12; r21) each recess section being formed to receive a corresponding tongue (t21, t22; t11) of the other one of said cooperating panels;
- each panel having, for each recess section (r11, r12; r21) thereof, an effective zone (z11, z12; z21) adjacent to said recess section, each effective zone having an in-plane size corresponding to that of the cooperating tongue of the other one of said cooperating panels, each effective zone defining a local panel thickness (D1; D2);
- wherein at least one of the basic connecting edges (e2) comprises a recess section (r21) disposed between two tongues (t21, t22), and
- wherein each recess section (r11, r12; r21) extends from the inner edge (b1; b2) into the respective inner panel face (I1; I2) by a recess distance (dr1, dr2) which is equal to or larger than a minimum recess distance, said minimum recess distance being equal to the local panel thickness (D2; D1) of the other one of said cooperating panels (P2; P1) divided by the sine of the inclination angle (α).

2. The two-panel assembly according to claim 1, wherein the two cooperating panels are identical.

3. The two-panel assembly according to claim 1 or 2, wherein the tongues of each panel are integrally formed therewith.

4. The two-panel assembly according to one of claims 1 to 3, wherein each panel has a uniform panel thickness (DP1; DP2).

5. The two-panel assembly according to claim 4, wherein each tongue (t21, t22; t11) has a tongue thickness (dt21, dt22; dt11) which is substantially identical to the respective uniform panel thickness (DP1; DP2).

6. The two-panel assembly according to one of claims 1 to 5, wherein the inclination angle α is in the range of 30º to 150º, preferably 75º to 120º, particularly about 90º.

7. The two-panel assembly according to one of claims 1 to 6, wherein
- the first panel further comprises a first complementary connecting edge (e3) intersecting the basic connecting edge (e1) of the first panel at a first vertex angle (β1) and wherein the second panel further comprises a second complementary connecting edge (e4) intersecting the basic connecting edge (e2) of the second panel at a second vertex angle (β2) and also intersecting the first complementary connecting edge (e3) when the first panel (P1) and the second panel (P2) are connected to each other;
- the first complementary connecting edge (e3) having at least one substantially planar, rigid complementary tongue (t31) protruding therefrom,
- each complementary tongue (t31) having an inner complementary tongue face (J31) adjacent to and facing towards the inner panel face (I1) of the first panel (P1) at a complementary inclination angle (ϑ), whereby a complementary inner edge (b3) along the complementary connecting edge (e3) is defined as intersection of the inner complementary tongue face (J31) with the inner panel face (I1) of the first panel (P1);
- the first complementary connecting edge (e3) further comprising first complementary recess sections (r31, r32), each complementary recess section being formed to receive a correspondingly formed supplementary tongue of a supplementary panel (P3) to be connected to the two-panel assembly; and
- the second complementary connecting edge (e4) being provided with stopper faces (f) for the supplementary panel.

8. The two-panel assembly according to claim 7, wherein the vertex angle (β1, β2) of each panel is independently selected in the range of 60º to 150º, preferably 75º to 120º, particularly about 90º.

9. The two-panel assembly according to claim 7 or 8, wherein the vertex angle (β1, β2) of each panel and the inclination angle (α) are all substantially 90º.

10. A self-supporting three-panel assembly, comprising a two-panel assembly according to one of claims 7 to 9 and further comprising a supplementary panel (P3) cooperating therewith, with the following features:
- the supplementary panel (P3) has an inner face (I3), an outer face (03), and first and second supplementary connecting edges (e5, e6) intersecting each other at a supplementary vertex angle (γ),
- the supplementary panel is substantially rigid at least in a neighborhood of the supplementary connecting edges;
- the first supplementary connecting edge (e5) has at least one substantially planar, rigid supplementary tongue (t51, t52) protruding therefrom;
- each supplementary tongue (t51, t52) has an inner supplementary tongue face (J51, J52) adjacent to and facing towards the inner panel face (I3) of the supplementary panel (P3) at said complementary inclination angle (ϑ), whereby a supplementary inner edge (b5) along the first supplementary connecting edge (e5) is defined as intersection of the inner supplementary tongue face (J51, J52) with the inner panel face (I3) of the supplementary panel (P3);
- the first supplementary connecting edge (e5) further comprises at least one first supplementary recess sections (r51), each first supplementary recess section being formed to receive a corresponding tongue (t31) of the first complementary connecting edge (e3) of the first panel (P1);
- the first panel (P1) having, for each first complementary recess section (r31, r32) thereof, an effective zone (z31, z32) adjacent to said recess section, each effective zone having an in-plane size corresponding to that of the corresponding tongue of the supplementary panel (P3), each effective zone defining a local complementary panel thickness (DC);
- the supplementary panel (P3) having, for each first supplementary recess section (r51) thereof, an effective zone (z51) adjacent to said recess section, each effective zone having an in-plane size corresponding to that of the corresponding tongue of the first panel (P1), each effective zone defining a local supplementary panel thickness (DS);
- wherein at least one of the first complementary connecting edge (e3) and the first supplementary connecting edge (e5) comprises a recess section (r51) disposed between two tongues (t51, t52);
- wherein each one of said complementary recess sections (r31, r32) and supplementary recess sections (r51) extends from the respective inner edge (e3; e5) into the respective inner panel face (I3; I5) by a recess distance (dr3; dr5) which is equal to or larger than a minimum recess distance, said minimum recess distance being equal to the local supplementary or complementary panel thickness (DS, DC) of the other one of said first panel (P1) and supplementary panel (P3) divided by the sine of the complementary inclination angle (ϑ); and
- wherein the second supplementary connecting edge (e6) of the supplementary panel (P3) is substantially collinear with the second complementary connecting edge (e4) of the second panel (P2) and abuts against the stopper faces (f) thereof.

11. The three-panel assembly according to claim 10, wherein the first vertex angle (β1), the second vertex angle (β2), the supplementary vertex angle (γ), the inclination angle (α) and the complementary inclination angle (ϑ) are substantially 90º.

12. The three-panel assembly according to claim 10 or 11, further comprising means for mutually locking the second supplementary connecting edge (e6) and the second complementary connecting edge (e4).

13. The three-panel assembly according to one of claims 10 to 12, wherein each panel has a shape selected from quadratic, cropped quadratic and triangular.

14. The three-panel assembly according to one of claims 10 to 13, further comprising at least one additional panel connected thereto along at least two edges.

15. A microwave reflector, particularly for remote sensing or as a radar reference point, comprising a three-panel assembly according to one of claims 11 to 13, wherein at least the inner faces of the panels are covered by a microwave reflecting material.
